# EUROPEAN PATENT SPECIFICATION

(11) **EP 2 082 794 B1**
(45) Date of publication and mention of the grant of the patent: **19.10.2011**
(21) Application number: 09000669.3
(22) Date of filing: 19.01.2009
(51) Int. Cl.: B01D 53/14

(54) **Method for removing ammonia from a methanol containing stream**
Verfahren zum Entfernen von Ammoniak aus einem methanolhaltigen Strom
Procédé de suppression d'ammoniac dans un flux contenant du méthanol

(30) Priority: 25.01.2008 US 19956
(43) Date of publication of application: 29.07.2009
(73) Proprietor: Air Products and Chemicals, Inc., Allentown, PA 18195-1501 (US)
(72) Inventor: Hidgon, Charles Roland, III, Allentown, PA 18104 (US); Berg, Jonathan James, Allentown, PA 18104 (US); Jakubowski, Thomas Leo, Huffman, TX 77336 (US)
(74) Representative: Kador & Partner

(56) References cited:
- EP-A- 0 427 897
- DE-A1- 2 759 123
- DE-A1- 3 322 473
- US-A- 2 878 099
- US-A- 4 381 926
- US-A- 4 515 760
- US-A- 4 522 638

## Description

### BACKGROUND OF THE INVENTION

The subject matter of this invention relates to reducing the concentration of ammonia in a methanol containing stream.

The Rectisol® process was developed in 1951 by Linde and Lurgi. For purposes of this invention, the phrase "Rectisol process" means a process that is capable of removing sulfur and sulfur containing compounds such as hydrogen sulfide from industrial gas process streams such as process streams generated by coal gasification, among other industrial processes. Rectisol processes typically operate at temperatures less than 0°C (32F) and employ an organic solvent such as methanol to solubilize and remove sulfur containing compounds from the industrial gas process stream. The Rectisol process can also remove carbon dioxide, ammonia, among other compounds from the industrial process stream. The Rectisol process is described in greater detail in Advances in Cryogenic Engineering, Vol. 15, Proceedings of the 1969 Cryogenic Engineering Conference, June 16-18, 1969. The Rectisol process can produce a stream that is enriched in sulfur containing compounds. This stream can be sent to a Claus process wherein the sulfur compounds are recovered for use or disposal. A typical Claus process is described in greater detail in Kirk-Othmer, fourth edition, volume 23, pages 440 - 443.

In a Rectisol process H₂S and COS are removed by absorption with cold methanol and concentrated; the resultant concentrated or sulfur enriched stream is then sent to other processes, most commonly the Claus process, for sulfur recovery or disposal. The concentrated sulfur stream is cooled and condensed methanol solvent is produced in order to limit loss of methanol from the overall process, and contamination of the sulfur stream with methanol, which can interfere with downstream sulfur recovery processes. During this cooling and condensation process, trace impurities such as ammonia and hydrogen cyanide can accumulate. This accumulation can result in process problems and/or corrosion. One important problem is the reaction of ammonia with carbon dioxide (normally present at substantial concentrations in the concentrated sulfur stream). This reaction can result in deposition of solid ammonium carbamate in the cooling heat exchanger, which can require shutdown of the entire Rectisol plant to remove this deposit.

Conventional processes for stripping or removing ammonia are disclosed in U.S. Patent Nos. 5,929,126; 5,948,378; 3,824,185; 3,985,859 and 4,689,156, as well as in the following publications
DE 27 59 123 discloses a process for elution of acid gases from gas mixtures.To improve the efficiency of the scrubbing process, 0.05-0.5 wt% ammonia are added to the methanol scrubbing solution. The ammonia chemically reacts with carbon dioxide and hydrogen sulfide to form ammonium carbamate and ammonium bisulfide. The used methanol comprising the ammonium compounds is introduced into a column for enriching hydrogen sulfide. Nitrogen is introduced into the lower region of the column. An overhead stream leaves the column which contains carbon dioxide and nitrogen. A liquid stream containing methanol, hydrogen sulfide and the ammonium compounds leaves the column at the bottom. None of the streams contains hydrogen cyanide.
DE 33 22 473 discloses a process for avoiding accumulation of undesirable components in a liquid medium by adsorption. The problem of deposition of ammonium carbamate is addressed. The adsorbent is charged with the undesirable components, e.g. ammonia, hydrogen cyanide or ethane, until an equilibrium is reached. The adsorbent is rinsed with a inert gas, e.g. nitrogen.
US 4,381.926 discloses a method for regulating ammonia concentration during scrubbing of gaseous mixtures. Methanol is employed for scrubbing acid gases from gaseous mixtures, often also containing small amounts of ammonia. A constant ammonia concentration is desirable. The problem of deposition of ammonium carbamate is addressed. By contact of at least a portion of methanol employed in the process with an ion exchange material at least a portion of the ammonia is removed.
US 4,522,638 discloses a method for regulating the ammonia content in scrubbing liquid used in a gas scrubbing process. Methanol is employed for scrubbing acid gases from gaseous mixtures, often also containing small amounts of ammonia. A constant ammonia concentration is desirable. The problem of deposition of ammonium carbamate is addressed. An ammonia-precipitating precipitant such as sulphuric acid or phosphoric acid is added to the scrubbing agent, e.g. methanol. The precipitate is separated from the scrubbing agent and may be used as fertilizer.
US 4.515,760 discloses a non-precipitating regulation of ammonia content in sour gas solvent scrubbing systems. Methanol is employed for scrubbing acid gases from gaseous mixtures, often also containing small amounts of ammonia. A constant ammonia concentration is desirable. The problem of deposition of ammonium carbamate is addressed. An acid is added to the methanol to form a water-soluble ammonium salt which is withdrawn from the scrubbing system in an aqueous phase.

### BRIEF SUMMARY OF THE INVENTION

The instant invention solves problems with conventional methods by reducing, if not eliminating, fouling of heat exchangers and other equipment (e.g., equipment used in the Rectisol® process), that can be caused by the accumulation of ammonium carbamate which can occur when the concentration of ammonia is sufficient to permit a reaction between ammonia and carbon dioxide. The known solutions to this problem involve periodic plant shutdowns to defrost and remove the ammonium carbamate (which are very costly), or the discharge of ammonia-contaminated methanol. Since the discharged methanol may also contain hydrogen cyanide and hydrogen sulfide, among other toxic compounds, the disposal of this methanol involves the permitting, handling, transportation and disposal of toxic and flammable materials. As a result, the invention can also eliminate these disposal and handling issues.

The invention provides simple and cost-effective methods of removing a sufficient amount of ammonia from the system to prevent heat exchanger fouling by ammonium carbamate, which methods are covered by claim 1. A stream (some times referred to as a slipstream) of methanol in which ammonia, hydrogen cyanide, among other compounds that have accumulated is sent to the top of a stripping column or other device, in which an inert gas, such as nitrogen, is contacted with the methanol stream in a countercurrent flow. The ammonia is at least partially stripped or removed by the nitrogen, and the overhead nitrogen stream containing the ammonia is removed from the Rectisol process in order to prevent the ammonia from building up or accumulating in the process (and in turn reacting to form ammonia carbamate). If desired, this ammonia-containing nitrogen stream can be added to the concentrated sulfur stream which is produced by the Rectisol process. The stripped liquid methanol exiting the bottom of the stripper column can be returned to the Rectisol process.

In some cases, accumulation of hydrogen cyanide may corrode equipment employed in the Rectisol process. In one aspect of the invention, hydrogen cyanide can be removed along with ammonia.

### BRIEF DESCRIPTION OF SEVERAL VIEWS OF THE DRAWINGS

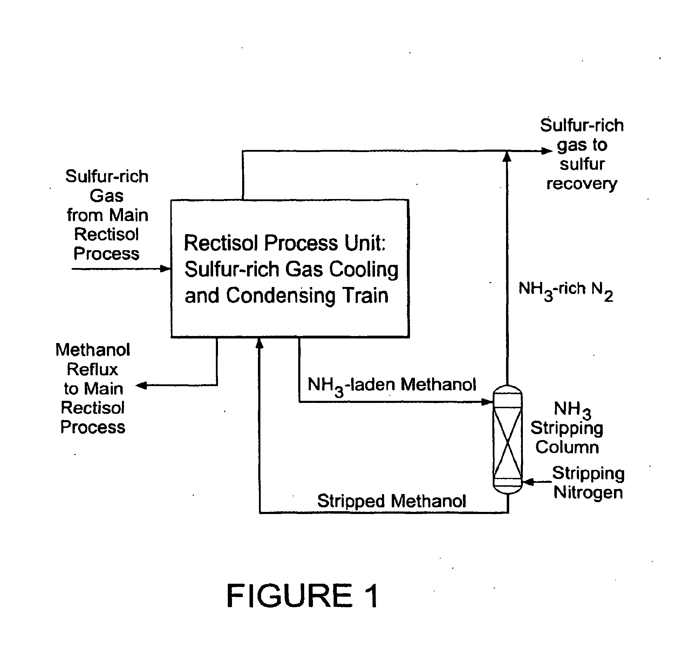

Figure 1 is a schematic drawing of one aspect of the instant invention wherein the concentration of ammonia is reduced via nitrogen exposure or stripping.

### DETAILED DESCRIPTION OF THE INVENTION

The instant invention relates to improving, for example, an industrial process (e.g., a Rectisol process) wherein sulfur species (e.g., H₂S, COS, among other compounds), are removed from an industrial gas feed stream by methanol absorption, and then concentrated for sulfur recovery or disposal in another unit, typically in a Claus plant wherein the sulfur species are recovered as liquid sulfur (for purposes of this invention the "Claus process"). The concentrated sulfur stream is normally generated in a steam-heated desorption column within equipment designed to conduct the Rectisol process. This concentrated stream can be cooled to condense excess methanol vapor before being sent to disposal or sulfur recovery, otherwise methanol losses from the system can be relatively large. The concentrated sulfur stream typically also contains relatively large amounts of carbon dioxide, often about 50% or more on a molar basis.

The cooling and methanol condensation of the Rectisol process are typically done in a cooling loop using some source of relatively cold temperatures, typically below -17.8°C (zero degrees F), such as a cold vent gas or a refrigerant. The temperatures required to condense methanol from the concentrated sulfur stream can also condense ammonia, hydrogen cyanide, among other compounds or components. These trace components are typically present at relatively low concentrations in the feed gas to the Rectisol unit (e.g., effluent from a gasifier). Typically the Rectisol process is operated in a manner to route all ammonia and hydrogen cyanide into the concentrated sulfur stream. However, condensation of ammonia and hydrogen cyanide in connection with the methanol condensation can result in a build-up of these species. If the ammonia reaches a critical concentration, which may vary depending upon the temperatures and other species present, ammonia can react with carbon dioxide to form solid ammonium carbamate in the following reaction:

2 NH₃(g) + CO₂(g) → NH₄COONH₂ (solid)

The solid ammonium carbamate can foul cold heat transfer surfaces and cause excessive pressure drop in the cooling exchanger of the Rectisol process. Typically, the only practical solution once the pressure drop becomes too high is to shut down the heat exchanger (and necessarily the entire Rectisol process) and warm up the fouled surfaces. At temperatures above 54.4-60.0°C (130-140 F) the ammonium carbamate sublimates from the surfaces and can be purged.

Whether or not fouling occurs, depends upon the mass balance of the ammonia in the system and on the temperatures employed during cooling. If all ammonia absorbed from the Rectisol feed stream is disposed in the concentrated sulfur stream so that the resulting ammonia concentration in the cooling loop remains below the critical concentration, no significant fouling occurs. If the ammonia in the feed stream rises, or other process changes occur such that the critical ammonia concentration is reached, then fouling occurs and the plant must be shut down (with the attendant loss of production and revenue). While hydrogen cyanide does not cause fouling, it can build up in a similar way and potentially cause corrosion within the system. Fouling and/or corrosion are difficult to predict since prior to starting the Rectisol process, the ammonia and hydrogen cyanide levels in the Rectisol feed stream may be unknown or vary during operation of the Recitsol process.

In one aspect of the instant invention, a sidestream comprising methanol, ammonia and/or hydrogen cyanide is removed from the cooling train for the concentrated sulfur stream in the Rectisol system. For example, this stream can be taken from the process location where ammonia and/or hydrogen cyanide are at their maximum concentrations. This sidestream is fed to a stripping column (e.g., the top of a stripping column), which may use random or structured packing or trays, depending upon the design and size and other known variables. Desirable results have been obtained by using Random packing.

A gas (also known as a stripping gas) is fed to the bottom of the column and flows counter-current upward to the down-flowing methanol. This gas can be nitrogen or any other gas stream that is compatible with the species present and with the utility of the column's overhead vapor. In one aspect of the invention, the overhead vapor containing ammonia and/or hydrogen cyanide and the stripping gas are combined with the previously described concentrated sulfur stream (produced by the Rectisol process) and further processed (e.g., in a Claus process). While any suitable gas can be employed in the inventive process, examples of suitable gases comprises at least one member from the group consisting of nitrogen, argon, hydrogen, methane or natural gas are suitable. Desirable results have been obtained by using nitrogen.

The methanol containing stream exiting the bottom of the column, with reduced concentrations of ammonia and/or hydrogen cyanide, is typically returned to the Rectisol process. It should be noted that complete removal of ammonia and/or hydrogen cyanide may not be required or practical in the stripping column; it is only necessary to remove sufficient amounts to eliminate or substantially reduce fouling or corrosion. In general the methanol flow to the stripping device should be as low as practical, as this minimizes the stripping gas employed. The relative flows of liquid and stripping as to the column can be optimized depending upon the desired amount of ammonia to be removed. In some cases it will be useful to provide relatively large amounts of methanol to the stripping column and remove a lower percentage of ammonia and/or hydrogen cyanide; this may allow lower flows of stripping gas to be used.

The amount of stripping gas supplied to the column may vary depending upon the intended usage of the overhead vapor from the column. If the overhead vapor is provided to a Claus process, there may be a concentration limits on stripping gas, methanol or other components in the overhead vapor. The overall system can be optimized to meet all concentration parameters on streams exiting the stripping column (including, for example, the elimination of ammonia and/or hydrogen cyanide) while minimizing the required flows of stripping gas and methanol fed to the column.

Referring now to Figure 1, Fig 1 is a schematic illustration of one aspect of the instant invention. A sulfur-rich gas stream (source not shown) is introduced into the Rectisol system, and three streams exit the system. One exiting stream comprises a sulfur-rich stream that is typically further processed by a Claus process (not shown) in order to dispose or recover sulfur. A second exiting stream comprises methanol that is recycled to the Rectisol process. The third exiting stream comprising ammonia and methanol can be treated in accordance with the instant invention. The concentrations of methanol, ammonia and other components in the third stream can vary depending upon the feed stream introduced to the Rectisol process, effectiveness of the Rectisol process, operating conditions, among other parameters. The third stream is introduced into a stripping column or other device capable of causing an interaction between a stripping gas (e.g., an inert gas such as nitrogen), and the compound to be removed (e.g., ammonia). A suitable gas is introduced into the column and a stream containing ammonia and the stripping gas is released overhead, and a methanol stream having a reduced amount of ammonia (or stripped stream) is released from the bottom of the column. The stripped methanol can be reintroduced into the Rectisol process. The concentration of ammonia and stripping gas in the overhead stream can vary depending upon temperature, pressure, composition of feed stream to the Rectisol process, among other variables. The concentration of methanol (and other compounds) in the stream exiting the column can vary depending upon the previously identified variables but is typically greater than about 80% on a molar basis.

While any suitable temperature can be employed for operating the column, the temperature will normally range from about 4.4 to about 43.3°C (about 40 to about 110 F). The process pressure will normally range from 446.1 to about 790.8 kPa (50 to about 100 psig).

The instant invention can be used to treat a wide range of process streams other than those produced by a Rectisol process.

The following Examples are provided to illustrate certain aspects of the invention and do not limit the scope of the claims appended hereto.

### EXAMPLE 1

The following example is based upon a gas stream that was produced in a commercial industrial process and which was modeled in ASPEN using a proprietary thermodynamics package in accordance with conventional methods. The ammonia removal rate was adequate to reduce fouling of the Rectisol process equipment.

### Basis:

| | | |
|---|---|---|
| Feed Stream to Rectisol unit: | 3.2 10⁶m³/d (112 MMSCFD) | (15.6°C, 60 F std conditions) |
| Total flow to Claus Unit: | 7.1·10⁴ m³/d (2.5 MMSCFD) | (15.6°C, 60 F std conditions) |
| Methanol feed to stripper column: | 5.7·10⁻³ m³/min (1.5 GPM) | |
| N2 stripping gas to stripper column: | 368 m³/h (13,000 SCFH) | (15.6°C, 60 F std conditions) |
| Number of stages: | 8.0 | |
| **Total NH₃ removed:** | **(0.28 lbmoles/hr)** | **127 mol/h** |
| % NH₃ removal in stripper: | 40.4% | |
| % HCN removal in stripper: | 32.9% | |

### Stream Summary:

| Stream | Liquid Feed In | Stripping N2 In | Overhead Vapor Out | Liquid Bottoms Out |
|---|---|---|---|---|
| Mole Flow mol/h | | | | |
| CO2 | 57.42479 | 0.00000 | 57.42479 | 0.00000 |
| N2 | 0.19505 | 15 538.97690 | 15 525.06523 | 14.10672 |
| H2S | 367.70919 | 0.00000 | 367.70919 | 0.00000 |
| COS | 10.44170 | 0.00000 | 10.44170 | 0.00000 |
| HCN | 200.30639 | 0.00000 | 65.82079 | 134.48560 |
| NH3 | 317.85939 | 0.00000 | 128.49365 | 189.36574 |
| CH3OH | 7 619.82565 | 0.00000 | 159.89585 | 7 459.92527 |
| TOTAL | 8 573.76216 | 15 538.97690 | 16 314.85119 | 7 797.88334 |
| | | | | |
| Temperature, °C | 21.1 | 21.1 | 8.2 | 3.6 |
| Pressure, kPa | 694.3 | 708.1 | 694.3 | 708.1 |
| Mole Flow lbmol/hr | | | | |
| CO2 | 0.12660 | 0.00000 | 0.12660 | 0.00000 |
| N2 | 0.00043 | 34.25758 | 34.22691 | 0.03110 |
| H2S | 0.81066 | 0.00000 | 0.81066 | 0.00000 |
| COS | 0.02302 | 0.00000 | 0.02302 | 0.00000 |
| HCN | 0.44160 | 0.00000 | 0.14511 | 0.29649 |
| NH3 | 0.70076 | 0.00000 | 0.28328 | 0.41748 |
| CH3OH | 16.79884 | 0.00000 | 0.35251 | 16.44632 |
| TOTAL | 18.90191 | 34.25758 | 35.96809 | 17.19139 |
| | | | | |
| Temperature, F | 70.0 | 70.0 | 46.8 | 38.4 |
| Pressure, psia | 100.7 | 102.7 | 100.7 | 102.7 |

### EXAMPLE 2

[0022] The following example represents the same ammonia mass removal rate as in Example 1: 127 mol/h (0.28 lbmoles/hr). But in this Example the liquid methanol feed rate to the stripper is doubled, and the nitrogen stripping gas flow is adjusted to maintain that same mass removal rate. While the liquid feed rate doubles, the required N₂ stripping flow declines by 27%. The per cent ammonia removal (as opposed to the mass removal) drops from 40.4% in Example 1, to 20.8% in Example 2. This example illustrates that it is possible to optimize the stripping column in different ways to achieve a predetermined removal rate, depending on which variables are most important in a given facility.

### Basis:

| | | |
|---|---|---|
| Feed Stream to Rectisol unit: | 3.2·10⁶m³/d (112 MMSCFD) | (15.6°C, 60 F std conditions) |
| Total flow to Claus Unit: | 7.1·10⁴m³/d (2.5 MMSCFD) | (15.6°C, 60 F std conditions) |
| Methanol feed to stripper: | 11.4·10⁻³ m³/min (3.0 GPM) | |
| N2 stripping gas to stripper: | 269m³/d (9,500 SCFH) | (15.6°C, 60 F std conditions) |
| Number of theoretical stages: | 8.0 | |
| **Total NH₃ removed:** | **(0.28 lbmoles/hr)** | **127 mol/h** |
| % NH₃ removal in stripper: | 20.8% | |
| % HCN removal in stripper: | 6.4% | |

### Stream Summary:

| Stream | Liquid Feed In | Stripping N2 In | Overhead Vapor Out | Liquid Bottoms Out |
|---|---|---|---|---|
| Mole Flow mol/h | | | | |
| CO2 | 111.51051 | 0.00000 | 111.51051 | 0.00000 |
| N2 | 0.37524 | 11 355.40829 | 11 331.30439 | 24.47975 |
| H2S | 714.01472 | 0.00000 | 713.95484 | 0.06012 |
| COS | 20.27299 | 0.00000 | 20.27286 | 0.00000 |
| HCN | 388.95387 | 0.00000 | 24.84670 | 364.10717 |
| NH3 | 617.21947 | 0.00000 | 128.67753 | 488.54212 |
| CH3OH | 14 796.13775 | 0.00000 | 154.56278 | 14 641.57615 |
| TOTAL | 16 648.48455 | 11 355.40829 | 12 485.12962 | 15 518.76530 |
| | | | | |
| Temperature. °C | 21.1 | 21.1 | 12.1 | 5.6 |
| Pressure, kPa | 694.3 | 708.1 | 694.3 | 708.1 |
| Mole Flow lbmol/hr | | | | |
| CO2 | 0.24584 | 0.00000 | 0.24584 | 0.00000 |
| N2 | 0.00083 | 25.03439 | 24.98125 | 0.05397 |
| H2S | 1.57413 | 0.00000 | 1.57400 | 0.00013 |
| COS | 0.04469 | 0.00000 | 0.04469 | 0.00000 |
| HCN | 0.85750 | 0.00000 | 0.05478 | 0.80272 |
| NH3 | 1.36074 | 0.00000 | 0.28369 | 1.07705 |
| CH3OH | 32.61990 | 0.00000 | 0.34075 | 32.27915 |
| TOTAL | 36.70363 | 25.03439 | 27.52500 | 34.21302 |
| | | | | |
| Temperature, F | 70.0 | 70.0 | 53.8 | 42.1 |
| Pressure, psia | 100.7 | 102.7 | 100.7 | 102.7 |

## Claims

1. A method for treating a stream comprising:
providing a stream comprising ammonia, methanol and hydrogen cyanide,
contacting the stream with at least one inert gas under conditions sufficient to form a gas stream and a liquid stream wherein the gas stream comprises ammonia and the inert gas, and the liquid stream comprises methanol and ammonia.

2. The method of claim 1 wherein said gas comprises at least one member selected from the group consisting of nitrogen, argon, hydrogen and methane.

3. The method of Claim 1 wherein the inert gas comprises nitrogen.

4. The method of Claim 1 wherein the amount of hydrogen cyanide in the liquid stream is less than that present in the stream.

5. The method of claim 1 wherein the process pressure ranges from 446.1 kPa to 790.8 kPa (50 to 100 psig).

## Patentansprüche

1. Verfahren zum Behandeln eines Stroms, umfassend:
Bereitstellen eines Stroms, der Ammoniak, Methanol und Cyanwasserstoff umfaßt,
Inkontaktbringen des Stroms mit zumindest einem Inertgas unter ausreichenden Bedingungen, so daß ein Gasstrom und ein Flüssigkeitsstrom erzeugt werden, wobei der Gasstrom Ammoniak und das Inertgas umfaßt und der Flüssigkeitsstrom Methanol und Ammoniak umfaßt.

2. Verfahren nach Anspruch 1, wobei das Gas zumindest einen Bestandteil aufweist, der aus der Gruppe von Stickstoff, Argon, Wasserstoff und Methan ausgewählt ist.

3. Verfahren nach Anspruch 1, wobei das Inertgas Stickstoff umfaßt.

4. Verfahren nach Anspruch 1, wobei die Menge an Cyanwasserstoff im Flüssigkeitsstrom geringer als die im Strom vorhandene ist.

5. Verfahren nach Anspruch 1, wobei der Verfahrensdruck im Bereich von 446,1 bis 790,8 kPa (50 bis 100 psig) liegt.

## Revendications

1. Procédé de traitement d'un courant comprenant :
la fourniture d'un courant comprenant de l'ammoniac, du méthanol et du cyanure d'hydrogène,
la mise en contact du courant avec au moins un gaz inerte dans des conditions suffisantes pour former un courant gazeux et un courant liquide, le courant gazeux comprenant de l'ammoniac et le gaz inerte, et le courant liquide comprenant du méthanol et de l'ammoniac.

2. Procédé selon la revendication 1, dans lequel ledit gaz comprend au moins un élément choisi dans le groupe constitué par l'azote, l'argon, l'hydrogène et le méthane.

3. Procédé selon la revendication 1, dans lequel le gaz inerte comprend de l'azote.

4. Procédé selon la revendication 1, dans lequel la quantité de cyanure d'hydrogène dans le courant liquide est inférieure à celle présente dans le courant.

5. Procédé selon la revendication 1, dans lequel la pression de traitement varie de 446,1 kPa à 790,8 kPa (50 à 100 psig).
